# EUROPEAN PATENT APPLICATION

(11) **EP 4 066 693 A1**
(43) Date of publication of application: **05.10.2022**
(21) Application number: 21180302.8
(22) Date of filing: 18.06.2021
(51) Int. Cl.: A47G 19/22, B65D 81/38, A47J 41/00, A61J 9/00

(54) **A CURVED-NECK INSULATED CUP**

(30) Priority: 01.04.2021 CN 202120673944 U
(71) Applicant: Fu, Zhurong, Ningbo, Zhejiang 315000 (CN)
(72) Inventor: Fu, Zhurong, Ningbo, Zhejiang 315000 (CN)
(74) Representative: Zaboliene, Reda

(57) **Abstract**

The disclosure relates to a curved-neck insulated cup, comprising a shell (110) and an interior (120). The interior is arranged inside the shell. The shell comprises a first cup wall,(112) a second cup wall (114) and a bottom (113), which jointly form a cavity with an opening at the end. The first cup wall end is lower than the second cup wall end. The first cup wall gradually tilts inward from the bottom to the end, and the second cup wall also gradually tilts inward from the bottom to the end. The interior comprises a rim (121), a first inner wall (124), a second inner wall (125) and a bottom, which jointly form a cavity with an opening at the end. The first inner wall end is lower than the second inner wall end. The first inner wall gradually tilts inward from the bottom to the end, and the second inner wall also gradually tilts inward from the bottom to the end. An opening and a rim which tilt to the same side are arranged respectively at the end of the shell and the interior. The opening is fixed to the lower part of the rim by welding. Hence, the tilting rim is designed for easy use and meets personal needs of users.

## Description

### Field of the Invention

The disclosure relates to an insulated cup, and in particular to a curved-neck insulated cup.

### Background of the Invention

Various insulated cups with different designs are available on the market. However, the upper rim of insulated cups has been horizontal in design for a long time, which cannot meet the personal needs of users.

### Summary of the Invention

The disclosure proposes a curved-neck insulated cup to solve the problem existing in the prior art.

It comprises a shell and an interior. The interior is arranged inside the shell;

The shell comprises a first cup wall, a second cup wall and a bottom, which jointly form a cavity with an opening at the end. The first cup wall end is lower than the second cup wall end. The first cup wall gradually tilts inward from the bottom to the end, and the second cup wall also gradually tilts inward from the bottom to the end. The interior comprises a rim, a first inner wall, a second inner wall and a bottom, which jointly form a cavity with an opening at the end. The first inner wall end is lower than the second inner wall end. The first inner wall gradually tilts inward from the bottom to the end, and the second inner wall also gradually tilts inward from the bottom to the end.

Wherein, threads are made outside the rim.

Wherein, the opening of the shell and the rim of the interior tilt to the same side.

The interior is arranged inside the shell, and the opening is fixed to the rim by welding.

Compared with the prior art, the disclosure has the following beneficial effects: The curved-neck insulated cup proposed herein has reasonable structure design. An opening and a rim which tilt to the same side are arranged respectively at the end of the shell and the interior. The opening is fixed to the lower part of the rim by welding. The tilting rim is easy to use and meets personal needs of users.

### Brief Description of the Drawings

Fig. 1 is a sectional view of curved-neck insulated cup in an embodiment of the disclosure;
Fig. 2 is a sectional view of shell of curved-neck insulated cup in an embodiment of the disclosure;
Fig. 3 is a sectional view of interior of curved-neck insulated cup in an embodiment of the disclosure;

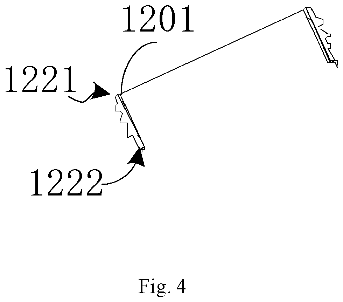

Fig. 4 is an enlarged diagram of rim of curved-neck insulated cup in an embodiment of the disclosure.

### Detailed Description of a Preferred Embodiment

The technical scheme provided in the embodiment of the disclosure will be clearly and completely described below with reference to the accompanying drawings in the embodiment of the disclosure. Obviously, the embodiment described represents only a part rather than all the embodiments of the disclosure. Based on the embodiment of the disclosure, all other embodiments obtained by persons of ordinary skill in the art without creative work shall fall within the scope of protection of the disclosure.

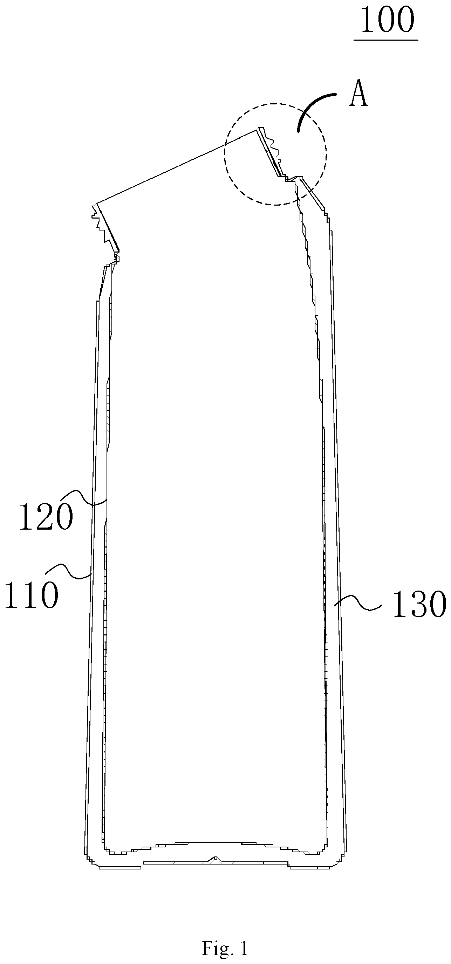

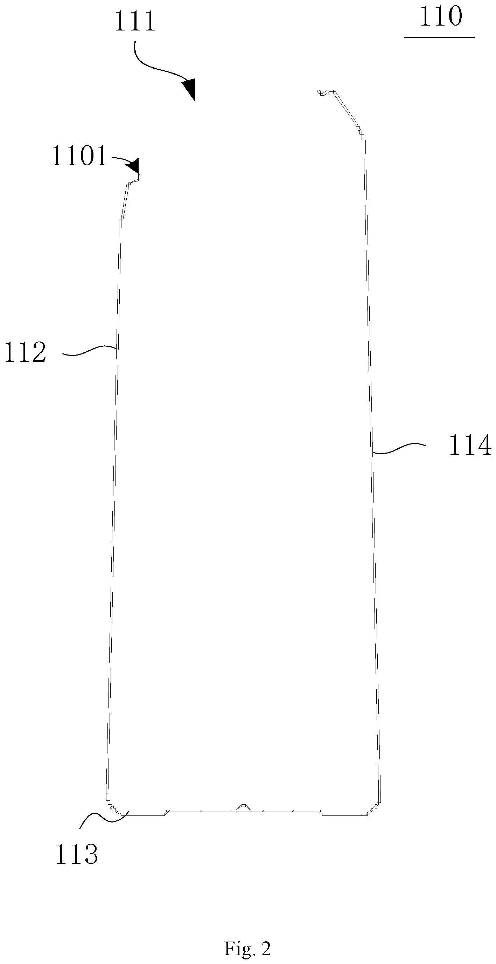

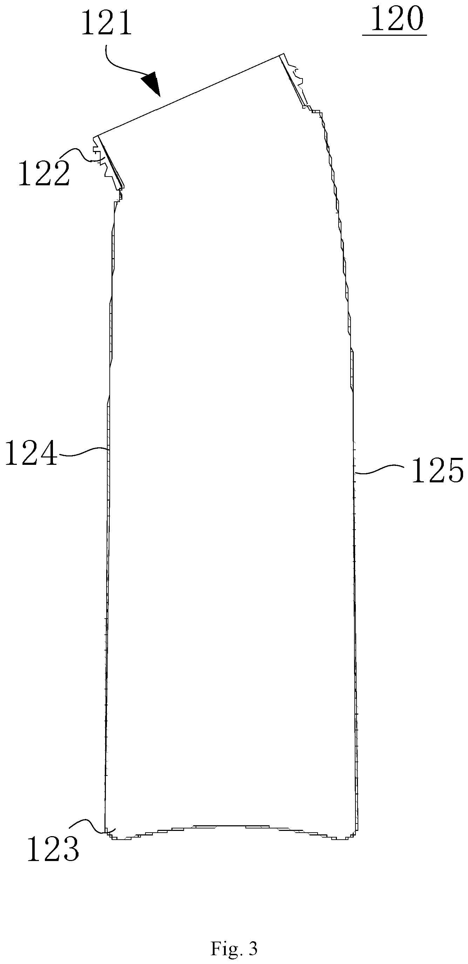

As shown in Figs 1-3, a curved-neck insulated cup (100) comprises a shell (110) and an interior (120). The interior (120) is arranged inside the shell (110). The shell (110) comprises a first cup wall (112), a second cup wall (114) and a bottom (113), which jointly form a cavity with an opening (111) at the end. The first cup wall (112) end is lower than the second cup wall (114) end. The first cup wall (112) gradually tilts inward from the bottom to the end, and the second cup wall (114) also gradually tilts inward from the bottom to the end. It should be understood that the cavity enclosed by the first cup wall (112), the second cup wall (114) and the bottom (113) with an opening at the upper end is cylindrical. The first cup wall (112) and the second cup wall (114) refer to the walls of the same cylinder. There is a difference between the first cup wall (112) and the second cup wall (114) in height, so the opening at the upper end is tilted.

The bottom (113) is convex downward at both outer sides, and concave in the middle, so that the cup is not easy to turn over when placed on tables and other objects with different roughness.

The interior (120) comprises a rim (121), a first inner wall (124), a second inner wall (125) and a bottom (123), which jointly form a cavity with an opening at the end. It is understandable that the opening at the end is also the opening of the rim (121). The first inner wall (124) end is lower than the second inner wall (125) end. The first inner wall (124) gradually tilts inward from the bottom to the end, and the second inner wall (125) also gradually tilts inward from the bottom to the end. It is understandable that both the first inner wall (124) and the second inner wall (125) tilt inward with a shape similar to a trapezoid, so that the opening of the rim (121) is smaller than the bottom (123) of the interior.

The threaded part (122) is arranged outside the rim (121) for fixing the cup lid (not identified in the figure).

Both the opening (111) of the shell (110) and the rim (121) of the interior (120) tilt in the same direction, that is, the first cup wall (112), the second cup wall (114), the first inner wall (124), and the second inner wall (125) all tilt in the same direction, and they all gradually tilt inward from the bottom to the end.

The interior (120) is arranged inside the shell (110). The upper edge (1221) of the threaded part (122) is welded to the upper rim (1201) of the interior. The lower edge (1222) of the threaded part (122) is welded to the upper edge (1101) of the shell. A hollow space is formed between the threaded part (122) and the interior (120), and a hollow interlayer (130) is formed between the shell (110) and the interior (120).

The curved-neck insulated cup proposed in the disclosure has reasonable structure design. An opening and a rim which tilt to the same side are arranged respectively at the end of the shell and the interior. The opening is fixed to the lower part of the rim by welding. The tilting rim is easy to use and meets personal needs of users.
The above description only presents the embodiment of the disclosure, and not be construed as limited to the scope of the disclosure. Any equivalent modifications made to the structure or process according to the specification and drawings of the disclosure, or direct or indirect applications to other related arts are included in the scope of protection of the disclosure in the same way.

## Claims

1. A curved-neck insulated cup, comprising a shell and an interior, wherein the interior is arranged inside the shell;
The shell comprises a first cup wall, a second cup wall and a bottom, which jointly form a cavity with an opening at the end. The first cup wall end is lower than the second cup wall end. The first cup wall gradually tilts inward from the bottom to the end, and the second cup wall also gradually tilts inward from the bottom to the end.
The interior comprises a rim, a first inner wall, a second inner wall and a bottom, which jointly form a cavity with an opening at the end. The first inner wall end is lower than the second inner wall end. The first inner wall gradually tilts inward from the bottom to the end, and the second inner wall also gradually tilts inward from the bottom to the end.

2. A curved-neck insulated cup according to claim 1, wherein a threaded part is arranged outside the rim.

3. A curved-neck insulated cup according to claim 1, wherein the opening of the shell and the rim of the interior tilt to the same side.

4. A curved-neck insulated cup according to claim 2, wherein the interior is arranged inside the shell. The upper edge of the threaded part is welded to the upper rim of the interior. The lower edge of the threaded part is welded to the upper edge of the shell. A hollow space is formed between the threaded part and the interior, and a hollow interlayer is formed between the shell and the interior.
